# DEMANDE DE BREVET EUROPEEN

(11) **EP 4 707 029 A1**
(43) Date de publication de la demande: **11.03.2026**
(21) Numéro de dépôt: 25199292.1
(22) Date de dépôt: 01.09.2025
(51) Int. Cl.: B60L 1/00, B60L 58/12, B60L 58/13, B60L 58/14, B60L 58/20, H02J 7/34, H02J 7/00, H02J 7/90

(54) **MÉTHODE D'AJUSTEMENT D'UN NIVEAU DE CHARGE D'UNE BATTERIE SECONDAIRE D'UN VÉHICULE ÉLECTRIQUE OU HYBRIDE ET VÉHICULE ÉLECTRIQUE OU HYBRIDE**

(30) Priorité: 06.09.2024 FR 2409503
(71) Demandeur: AMPERE s.a.s., 92100 Boulougne-Billancourt (FR)
(72) Inventeur: DUPUIS, NICOLAS, 78084 GUYANCOURT (FR); HARGAM, AMANI, 78084 GUYANCOURT (FR); JOUSSET, JULIEN, 78084 GUYANCOURT (FR)
(74) Mandataire: Renault Group

(57) **Abrégé**

L'invention propose une méthode d'ajustement d'un niveau de charge d'une batterie secondaire d'un véhicule électrique ou hybride alimenté par une batterie principale, comprenant les étapes suivantes :
a) une étape de détection de fin de mission du véhicule électrique ou hybride ;
b) une étape de détection du niveau de charge de la batterie secondaire ;
c) une étape d'arrêt de charge de la batterie secondaire si le niveau de charge de l'étape b) est supérieur à un seuil bas ;
d) une étape de charge de la batterie secondaire alimentée à partir de la batterie principale si le niveau de charge de l'étape b) est inférieur audit seuil bas ;
e) une nouvelle étape de détection du niveau de charge de la batterie secondaire ;
f) une étape d'arrêt de charge de la batterie secondaire si le niveau de charge de l'étape e) a atteint un seuil haut ;
g) une étape d'arrêt de charge de la batterie secondaire si le temps écoulé depuis l'étape d) a atteint une durée prédéterminée.

## Description

### Domaine technique de l'invention

L'invention concerne une méthode d'ajustement d'un niveau de charge d'une batterie secondaire d'un véhicule électrique ou hybride alimenté par une batterie principale.

En effet, les véhicules électriques tels que les véhicules automobiles comprennent une batterie principale, dite de traction, et une batterie secondaire, dite de servitude. La batterie de traction est la batterie haute-tension alimentant le moteur électrique du véhicule tandis que la batterie de servitude est la batterie basse-tension, en général de 12 à 14 volts, destinée à alimenter les fonctionnalités autres, telles que différents équipements de bord du véhicule.

L'invention concerne également un véhicule électrique ou hybride utilisant ladite méthode d'ajustement du niveau de charge de la batterie secondaire.

### Arrière-plan technique

Le moteur d'un véhicule électrique ou hybride est alimenté directement par une batterie de traction, via un onduleur en général, au travers d'un réseau électrique haute tension.

Un réseau électrique basse tension, dit réseau de bord 14V du véhicule électrique, est basé sur un convertisseur du courant continu qui puise de l'énergie dans la batterie principale haute tension, qui la transforme en énergie basse tension 14V, et qui alimente les composants électriques de la voiture, et en particulier une batterie secondaire basse tension 12V.

Ce convertisseur du courant continu 14V est la source principale d'énergie électrique de la voiture et la batterie secondaire ne sert qu'à fournir un complément si besoin et surtout à fournir l'électricité lorsque le véhicule est en phase de parking.

En phase de parking, la batterie secondaire permet d'alimenter tous les équipements 12V de la voiture au travers du réseau basse tension.

Par exemple, ces équipements 12V peuvent être les suivants : le système de freinage antiblocage des roues (ABS), le dispositif électronique de contrôle de la trajectoire du véhicule (ESP), les sièges électriques, le tableau de bord, les calculateurs, les feux/phares du véhicule, les capteurs, le dispositif de frein parking, le système d'ouverture de la voiture avec la clé, le système de sécurité pour faire tourner les roues en cas de défaillance de la batterie principale, la ventilation, la direction assistée, etc.

Ce réseau basse tension est important, et permet d'éviter de faire passer de la haute tension dans tout le véhicule.

En phase de roulage, les conducteurs qui font majoritairement des missions de courtes durées ne vont pas réussir à maintenir un niveau de charge suffisant de leur batterie secondaire, et cette dernière va donc se dégrader plus rapidement que la moyenne.

Ceci est notamment le cas pour les batteries au plomb, dont la chimie intérieure s'abîme lorsque la charge n'est pas complète.

Les batteries lithium sont moins sensibles, mais il est tout de même recommandé de les charger complètement pour optimiser leur durée de vie.

En phase de parking, c'est-à-dire lorsque la mission de véhicule est terminée, le véhicule a une consommation de veille de quelques milliampères. Si elle reste très longtemps à l'arrêt, la consommation s'accumule et la batterie secondaire se décharge.

Par exemple, pendant un mois, une batterie secondaire se décharge à peu près de 20%.

Ceci peut être problématique, car la batterie secondaire ne peut alors plus assurer sa fonction de sécurité en cas de défaillance de la batterie principale lors du roulage, notamment pour faire tourner les roues et permettre au conducteur de se mettre à l'abri sur le bas-côté.

### Résumé de l'invention

L'objectif de la présente invention est de pallier les différents inconvénients cités précédemment grâce à une batterie secondaire, dite de servitude, toujours chargée, afin qu'elle ne se dégrade pas ou peu dans le temps, quel que soit le mode de roulage du conducteur.

Ce but est atteint grâce à une méthode d'ajustement d'un niveau de charge d'une batterie secondaire d'un véhicule électrique ou hybride alimenté par une batterie principale, comprenant les étapes suivantes :
a) une étape de détection de fin de mission du véhicule électrique ou hybride marquant le démarrage d'une phase de parking ;
b) une étape de détection du niveau de charge de la batterie secondaire suite à l'étape a), de préférence après une durée donnée après le démarrage de la phase parking ;
c) une étape d'arrêt de charge de la batterie secondaire par la batterie principale, si le niveau de charge de l'étape b) est supérieur à un seuil bas ;
d) une étape de charge de la batterie secondaire alimentée à partir de la batterie principale si le niveau de charge de l'étape b) est inférieur audit seuil bas, l'étape d) comportant une mesure du temps écoulé depuis le démarrage de cette charge de ladite batterie secondaire ;
e) suite à l'étape d), une nouvelle étape de détection du niveau de charge de la batterie secondaire ;
f) une étape d'arrêt de charge de la batterie secondaire lorsque l'une des conditions entre l'atteinte d'un seuil haut du niveau de charge à l'étape e) et l'atteinte d'une durée prédéterminée par le temps écoulé mesuré dans l'étape d) est réalisée.

La batterie secondaire est chargée par la batterie principale avant le démarrage de la phase de parking par la batterie principale, c'est-à-dire qu'elle est alimentée par la batterie principale avant le démarrage de la phase de parking, pendant une phase de roulage.

L'étape d'arrêt de charge de la batterie secondaire par la batterie principale à l'étape c) s'entend par un arrêt de la charge de la batterie secondaire par la batterie principale si la charge était en cours précédemment, ou par le fait de rester dans une situation sans recharge de la batterie secondaire par la batterie principale si aucune charge n'était en cours précédemment.

Avec cette stratégie de charge en fin de mission, la batterie principale (producteur d'énergie) est maintenue allumée aussi longtemps que la batterie secondaire n'est pas suffisamment bien chargée, même si la mission du véhicule est terminée, c'est-à-dire même lorsque le véhicule n'est plus en phase de roulage. Autrement dit, la charge de la batterie secondaire par la batterie principale est maintenue ou redémarrée après que le véhicule passe dans la phase de parking, et que le niveau de charge mesuré de la batterie secondaire est inférieur au seuil bas défini.

L'idée principale de cette invention consiste à mettre en place une stratégie de charge de la batterie secondaire en fin de mission, pour maintenir la batterie secondaire au bon niveau de charge pour lui permettre d'assurer ses fonctions dans les meilleures conditions. En particulier, dès le début de la mission suivante, la batterie sera au niveau de charge requis pour assurer la fourniture du réseau même en cas de perte soudaine du producteur électrique principal, en l'espèce la batterie principale.

Grâce à cette stratégie, le mode de roulage du conducteur n'aura plus d'impact sur la dégradation de la batterie secondaire.

De plus, le fait d'ajouter une condition sur la durée de charge de la batterie secondaire permet d'éviter une décharge trop importante de la batterie principale, par exemple en cas de défaut sur la batterie secondaire qui ne lui permet pas de se charger au niveau souhaité.

Selon les différents modes de réalisation de l'invention, qui pourront être pris ensemble ou séparément :
- la détection de fin de mission correspond à une action spécifique réalisée par le conducteur du véhicule électrique ou hybride à l'arrêt, du type appuyer sur un bouton OFF, ou mettre un levier en position Parking, ou se lever de son siège.
- ledit seuil bas est compris entre 80% et 90% de charge.
- ledit seuil bas est égal à 85%.
- ledit seuil haut est compris entre 90% et 100% de charge.
- ledit seuil haut est égal à 95%.
- ladite durée prédéterminée est comprise entre 15 minutes et 60 minutes.
- ladite durée prédéterminée est égale à 30 minutes.

L'invention concerne également un véhicule électrique ou hybride comprenant :
- une batterie principale servant à alimenter le moteur de traction du véhicule ;
- une batterie secondaire alimentée par la batterie principale via un convertisseur ;
- une unité centrale recevant des informations d'entrée en provenance de différents capteurs, effectuant des calculs, et envoyant des informations de sortie au convertisseur ;
ladite unité centrale mettant en oeuvre une méthode d'ajustement d'un niveau de charge de la batterie secondaire selon l'une des revendications précédentes.

L'unité centrale calcule le niveau de charge et pilote le convertisseur pour réaliser l'arrêt de charge de la batterie secondaire si besoin.

### Brève description des figures

D'autres caractéristiques et avantages de l'invention apparaitront au cours de la lecture de la description détaillée qui va suivre pour la compréhension de laquelle on se reportera aux dessins annexés dans lesquels :
La figure 1 est une vue schématique du réseau électrique au sein d'un véhicule électrique ou hybride ;
La figure 2 est un diagramme de présentation de la méthode d'ajustement du niveau de charge d'une batterie secondaire d'un véhicule électrique ou hybride selon l'invention ;
La figure 3 est un graphique représentant l'état de charge de la batterie secondaire en fonction du temps, selon l'art antérieur ;
La figure 4 est un graphique représentant l'état de charge de la batterie secondaire en fonction du temps, selon l'invention, et avec comparaison de l'art antérieur.

### Description détaillée de l'invention

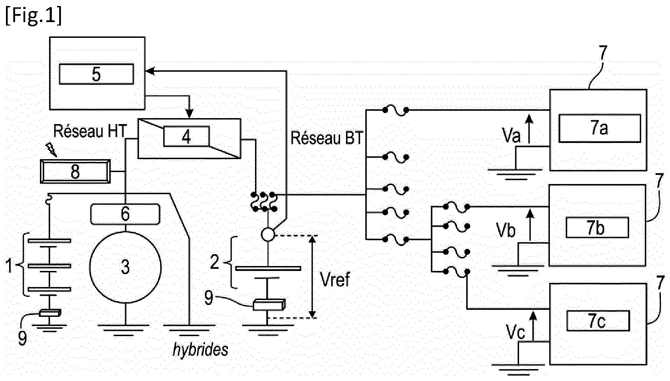

La figure 1 représente schématiquement le réseau électrique au sein d'un véhicule électrique ou hybride.

Ce réseau électrique est divisé en deux parties, à savoir un réseau haute tension, et un réseau basse tension.

Le réseau haute tension est illustré en partie inférieure gauche de la figure 1.

Ce réseau haute tension comprend une batterie principale 1, dite de traction, qui sert à alimenter un moteur 3 électrique. Un onduleur 6 est disposé entre la batterie principale 1 et le moteur 3, destiné à protéger le moteur 3 contre tout risque électrique.

Dans ce réseau haute tension est également représentée une branche provenant d'un moteur 3 thermique dans le cas d'un véhicule hybride.

Un chargeur 8 est également disposé sur le réseau haute tension et permet la charge de la batterie principale 1.

La haute tension délivrée soit par la batterie principale 1, soit par le chargeur 8, soit par le moteur 3 thermique, arrive dans un convertisseur 4 DC/DC qui convertit cette haute tension en basse tension.

En général, la haute tension se situe aux alentours des 400 V, tandis que la basse tension se situe aux alentours des 14 V.

Le réseau basse tension en sortie du convertisseur 4 se trouve sur la partie droite de la figure 1.

Ce réseau basse tension permet d'alimenter tous les équipements du véhicule qui fonctionnent en basse tension, généralement en 12V. Sur la figure 1, seuls trois équipements 7 sont illustrés par souci de clarté. Bien entendu, le véhicule comprend beaucoup d'autres équipements alimentés en basse tension.

Par exemple l'équipement 7a correspond à un système de freinage antiblocage (ABS), avec la tension Va aux bornes de cet équipement 7a.

L'équipement 7b correspond au dispositif de réglage des sièges, avec la tension Vb aux bornes de cet équipement 7b.

L'équipement 7c correspond au tableau de bord, avec la tension Vc au bornes de cet équipement 7c.

Comme mentionné dans la première partie de la description, d'autres équipements 7 sont connectés à ce réseau basse tension.

Par exemple, ces équipements 12V peuvent être les suivants : le dispositif électronique de contrôle de la trajectoire du véhicule (ESP), les calculateurs 5, les feux/phares du véhicule, les capteurs, le dispositif de frein parking, le système d'ouverture de la voiture avec la clé, le système de sécurité pour faire tourner les roues en cas de défaillance de la batterie principale 1, la ventilation, la direction assistée, etc.

Ce réseau basse tension alimente également une batterie secondaire 2, dite batterie de servitude, fonctionnant en 12 V.

La tension Vref aux bornes de cette batterie secondaire 2 correspond à la tension de référence du réseau de bord.

Un calculateur 5, correspondant à une unité centrale, est relié à la fois au convertisseur 4 et à la batterie secondaire 2. Il reçoit en entrée la mesure de la tension de référence Vref en provenance de la batterie secondaire 2, et donne en sortie une consigne de tension au convertisseur 4. Ceci permet de compenser les pertes en ligne de tension qui existent entre la batterie secondaire 2 et le convertisseur 4.

De préférence, des capteurs de courant 9 sont disposés en série avec la batterie principale 1 et la batterie secondaire 2 afin de mesurer le courant qui passe à travers les batteries.

Lorsque le véhicule est à l'arrêt, en parking, l'utilisateur peut le recharger en connectant le chargeur 8 du véhicule à une borne de recharge. La batterie principale 1 se charge ainsi grâce au chargeur 8. La batterie secondaire 2 quant à elle ne se charge pas lorsque le véhicule est à l'arrêt, en parking. La batterie secondaire 2 se charge uniquement lors des phases de roulage.

Lorsque le conducteur effectue des phases de roulage de courte durée, appelées encore mission de courte durée, la batterie secondaire 2 n'a pas le temps de se charger suffisamment. En effet, le véhicule reste longtemps sur des phases d'arrêt, c'est-à-dire des phases de parking. Ainsi, au fur et à mesure des missions de courte durée, entrecoupées de longues phases d'arrêt, la batterie secondaire 2 se décharge progressivement.

On estime que la batterie secondaire 2 est chargée complètement lorsque son état de charge ou sa quantité d'énergie électrique restante se situe entre 90% et 100%.

L'estimation de l'état de charge d'une batterie peut être réalisée par une méthode OCV (Open Circuit Voltage ou Tension en Circuit Ouvert) ou encore par une méthode coulométrique. La tension Vref aux bornes de la batterie secondaire 2 est mesurée, et envoyée au calculateur 5 qui est alors capable d'estimer l'état de charge de la batterie, en fonction également de certains autres paramètres (température, type de batterie, etc.). Cette estimation est effectuée lorsque le véhicule est en parking, avec une consommation électrique très réduite, et un temps de repos suffisant (typiquement plusieurs heures) pour stabiliser la tension de la batterie secondaire 2 de telle sorte qu'elle soit représentative de son état de charge.

En roulage, l'état de charge de la batterie secondaire 2 varie.

Le SOC (initiales de l'expression anglaise « State of Charge ») représente l'état de charge réel de la batterie secondaire 2 par rapport à sa capacité totale. Le SOC varie de 0 % à 100 %, s'initialise par l'OCV si disponible, et varie en fonction de l'intégrale du courant passant dans la batterie secondaire 2, donc en utilisant le capteur de courant 9 de la batterie secondaire 2, ou un capteur de courant SOC spécifique.

Alternativement, une jauge VT (Voltage Time) détecte la tension de la batterie secondaire et informe de la quantité restante d'énergie électrique disponible en vie à bord. Cette jauge varie de 0% à 100%, s'initialise par l'OCV si disponible, et varie en fonction du temps passé à un niveau de tension donné. Cette jauge ne nécessite donc pas de capteur de courant. (Elle n'est pas représentée sur la figure 1)

Pour éviter que la batterie secondaire 2 ne se décharge progressivement au fur et à mesure des missions de roulage de courte durée, une méthode d'ajustement du niveau de charge de la batterie secondaire 2 est appliquée par le calculateur 5 à chaque fin de mission du véhicule électrique ou hybride.

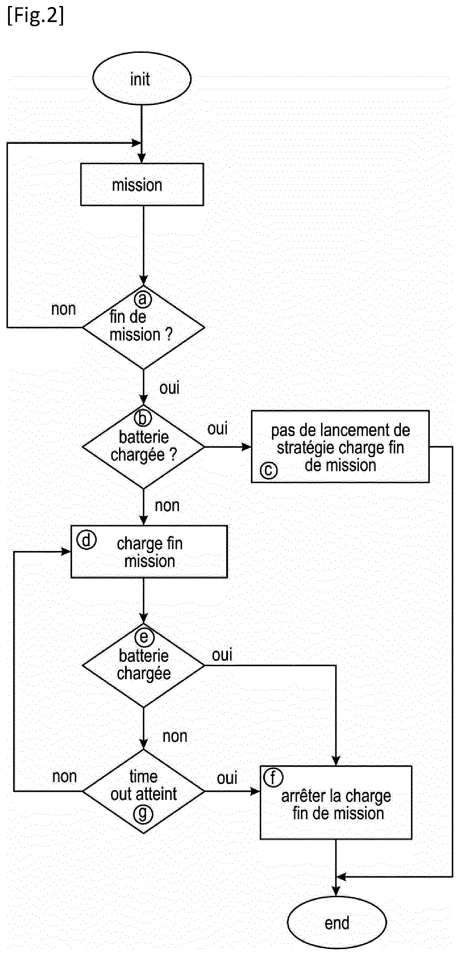

Cette méthode est illustrée en figure 2 et comprend les étapes suivantes :
a) une étape de détection de fin de mission du véhicule électrique ou hybride ; tant que cette étape n'est pas détectée, cela signifie que le véhicule électrique ou hybride est en phase de roulage, et que l'ajustement du niveau de charge de la batterie ne peut pas démarrer.
b) une fois que la fin de mission a été détectée, il y a une étape de détection du niveau de charge de la batterie secondaire 2 ; le calculateur 5 regarde alors l'estimation du niveau de charge, en l'espèce le SOC ou la jauge VT. La détection de la fin de mission marque le démarrage d'une phase de parking.
c) si le niveau de charge de la batterie secondaire 2 est supérieur à un seuil bas, alors cela signifie que la batterie secondaire 2 est suffisamment chargée et qu'il n'est pas nécessaire de lancer la stratégie de charge de fin de mission. Le calculateur 5 n'effectue pas la charge de la batterie secondaire 2.
d) si le niveau de charge de la batterie secondaire 2 est inférieur au seuil bas, alors cela signifie que la batterie secondaire 2 n'est pas suffisamment chargée et qu'il est nécessaire de lancer la stratégie de charge de fin de mission. La batterie secondaire 2 reste alors alimentée par la batterie principale 1, ou son alimentation par la batterie principale 1 est activée.
e) en temps réel, le calculateur 5 calcule l'évolution du niveau de charge de la batterie secondaire 2.
f) si le niveau de charge de la batterie secondaire 2 a atteint un seuil haut, alors le calculateur 5 commande l'arrêt de la charge de la batterie secondaire 2. Tant que ce seuil haut n'est pas atteint, la batterie secondaire 2 continue d'être chargée.
g) par sécurité, si le temps écoulé depuis le début de la charge de la batterie secondaire 2 une fois la fin de mission détectée a atteint une durée prédéterminée, alors le calculateur 5 commande l'arrêt de la charge de la batterie secondaire 2. Pour cela, une mesure du temps de charge de la batterie secondaire 2 est mesurée dès le démarrage de cette phase de charge par la batterie principale 1.

Pour résumer, le fonctionnement est le suivant. Une fois que la fin de mission du véhicule est détectée, le calculateur active la stratégie de charge de la batterie secondaire 2 si elle n'est pas suffisamment chargée. À partir de cet instant, il garde le véhicule réveillé, c'est-à-dire avec des calculateurs non mis en veille de manière à pouvoir piloter les différentes étapes de l'ajustement du niveau de charge de la batterie secondaire 2. La batterie principale 1 est maintenue active de manière à continuer à charger la batterie secondaire 2, ou réactivée pour charger la batterie secondaire 2 si la charge de ladite batterie secondaire 2 par la batterie principale 1 avait été désactivé lors de la détection de fin de mission, et ainsi compléter la charge de la batterie secondaire 2 jusqu'à atteindre le seuil du niveau de charge prévue sur le SOC ou la jauge VT. En effet, comme indiqué précédemment, suivant le mode utilisé pour mesurer le niveau de charge de la batterie secondaire 2, un temps de repos de ladite batterie secondaire 2 peut être nécessaire et impliquant un arrêt de la charge de la batterie secondaire 2 par la batterie principale 1 avant de lancer l'étape b) de détection du niveau de charge de la batterie secondaire 2. L'étape d) de charge de la batterie secondaire 2 par la batterie principale 1 est limité dans le temps par sécurité.

Le calculateur 5 pilote le convertisseur 4 pour réaliser l'arrêt de la recharge de la batterie secondaire 2, soit lorsque le niveau de charge atteint le seuil haut, soit lorsque la durée maximale de charge est dépassée.

En appliquant cette méthode, la batterie secondaire 2 peut être rechargée automatiquement au début des phases d'arrêt, et cela de façon invisible pour le conducteur du véhicule. Grâce à ces recharges, la batterie secondaire 2 conserve un niveau de charge maximal, ce qui permet d'éviter la détérioration au fur et à mesure de la batterie, et ce qui permet d'assurer les fonctions de sécurité quel que soit le type de roulage du conducteur. La batterie secondaire 2 est ainsi toujours opérationnelle.

De façon concrète, la détection de fin de mission correspond à une action spécifique réalisée par le conducteur du véhicule électrique ou hybride à l'arrêt, du type appuyer sur un bouton OFF, ou mettre un levier en position Parking, ou se lever de son siège. D'autres actions peuvent être envisagées et rentrent dans le cadre de la présente invention. Ces actions dépendent de chaque type de véhicule électrique ou hybride.

Le seuil bas est compris entre 80% et 90% de charge. Sous ce seuil bas, on estime que la batterie secondaire 2 n'est pas suffisamment chargée et qu'il existe un risque de décharge progressive, et donc à terme un risque de ne plus assurer les fonctions de sécurité.

De préférence, ledit seuil bas est égal à 85%.

Le seuil haut est compris entre 90% et 100% de charge. Lorsque la batterie secondaire 2 a atteint le seuil haut, on estime que la batterie est suffisamment chargée pour la prochaine phase de roulage, et qu'elle peut donc assurer toutes les fonctions de sécurité.

De préférence, ledit seuil haut est égal à 95%.

La durée prédéterminée est comprise entre 15 minutes et 60 minutes. En effet, il est important de limiter la recharge de la batterie secondaire 2 dans le temps, par exemple s'il y a un défaut sur la batterie secondaire 2 et qu'elle n'arrive pas à se charger, car cela pourrait conduire à la décharge de la batterie principale 1, ce qui n'est pas souhaitable.

De préférence, ladite durée prédéterminée est égale à 30 minutes. Cette durée est préférentielle car il est connu que les batteries sont normalement suffisamment chargées au bout de 30 minutes de charge.

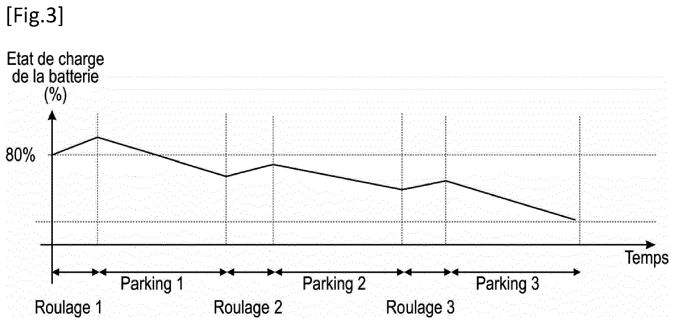

La figure 3 illustre l'évolution de l'état de charge de la batterie secondaire 2 lorsqu'il n'y a aucune méthode d'ajustement du niveau de charge de la batterie secondaire 2.

Sur cette figure, sont illustrées les différentes phases de roulage et les phases de parking. Cela correspond à des conducteurs effectuant des missions de courte durée.

Le niveau de charge de la batterie est situé à 80 % au départ. Après la première étape de roulage (Roulage 1), la batterie secondaire 2 s'est un peu rechargée et son niveau de charge est passé à environ 82 %. S'ensuit une étape de parking (Parking 1) qui fait chuter le niveau de charge de la batterie secondaire 2 à 77 %. La 2^{e} étape de roulage (Roulage 2) permet de recharger un peu la batterie secondaire 2 sans pour autant avoir le temps d'atteindre les 80 %. S'ensuit une étape de parking (Parking 2) qui fait chuter le niveau de charge à 75 %. La 3^{e} étape de roulage (Roulage 3) permet de charger un peu la batterie secondaire 2 sans pour autant avoir le temps d'atteindre les 80 %. S'ensuit une étape de parking (Parking 3) qui fait chuter le niveau de charge à 70 %.

Et ainsi de suite. On comprend donc que le niveau de charge ne cesse de baisser d'une phase de parking à l'autre, car les phases de roulage ne sont pas suffisamment longues pour faire charger la batterie secondaire 2 entre temps.

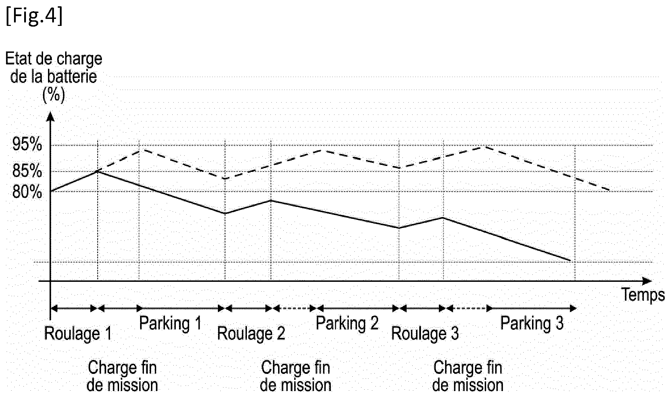

La figure 4 illustre l'évolution de l'état de charge de la batterie secondaire 2 lorsque la méthode d'ajustement du niveau de charge est appliquée, selon l'invention.

Dans cet exemple, le niveau de charge à atteindre, appelé SOC cible, et correspondant au seuil haut, est situé à 95 %.

Tout comme la figure 3, cette figure 4 montre les différentes phases de roulage et les phases de parking, effectuées par des conducteurs effectuant des missions de courte durée à répétition.

La courbe en trait plein représente le niveau de charge selon l'art antérieur, d'après la figure 3.

La courbe en trait discontinu représente le niveau de charge selon l'invention. Le niveau de charge de la batterie est situé à 80 % au départ. Après la première étape de roulage (Roulage 1), la batterie secondaire 2 s'est un peu rechargée et son niveau de charge est passé à environ 85 %. S'ensuit une étape de fin de mission où la stratégie de charge de fin de mission est activée afin que le niveau de charge de la batterie atteigne les 95 %. Dès que ce niveau de charge est atteint, on se retrouve dans une phase de parking (Parking 1) traditionnel où la batterie secondaire 2 se décharge progressivement, ici jusqu'à atteindre 83 %. La 2^{e} étape de roulage (Roulage 2) permet de charger un peu la batterie secondaire 2, cette fois en la faisant atteindre les 87%. Le seuil haut n'étant pas atteint, il est nécessaire d'enclencher la stratégie de charge de fin de mission, jusqu'à ce que la batterie atteigne les 95%. Puis s'ensuit à nouveau une phase de parking de parking (Parking 2) traditionnel où la batterie secondaire 2 se décharge progressivement, ici jusqu'à atteindre 85 %. La 3^{e} étape de roulage (Roulage 3) permet de charger un peu la batterie secondaire 2 cette fois en la faisant atteindre les 90 %. Le seuil haut n'étant pas atteint, il est donc nécessaire d'enclencher la stratégie de charge de fin de mission, jusqu'à ce que la batterie secondaire atteigne les 95%, avant de basculer dans une phase de parking (Parking 3).

Avec l'activation de la stratégie de charge de fin de mission, on s'aperçoit donc qu'il est possible de conserver un niveau de charge de la batterie secondaire qui atteint ou au moins avoisine le seuil haut recommandé, et cela malgré des phases de roulage courtes.

Cette stratégie de charge de fin de mission présente l'avantage de ne pas dépendre de la technologie de la batterie secondaire, c'est-à-dire qu'elle peut être appliquée sur des batteries plomb ou lithium par exemple.

De plus, cette stratégie peut s'appliquer quelle que soit la définition technique de véhicule (présence ou non d'un capteur de courant), et ne nécessite pas d'ajouter des nouveaux composants.

Les configurations montrées aux figures citées ne sont que des exemples possibles, nullement limitatifs, de l'invention qui englobe au contraire les variantes de formes et de conceptions à la portée de l'homme de l'art.

## Revendications

1. Méthode d'ajustement d'un niveau de charge d'une batterie secondaire (2) d'un véhicule électrique ou hybride alimenté par une batterie principale (1), comprenant les étapes suivantes :
a) une étape de détection de fin de mission du véhicule électrique ou hybride marquant le démarrage d'une phase de parking ;
b) une étape de détection du niveau de charge de la batterie secondaire 2 suite à l'étape a) ;
- si le niveau de charge de l'étape b) est supérieur à un seuil bas,
c) une étape d'arrêt de charge de la batterie secondaire (2) par la batterie principale ;
- si le niveau de charge de l'étape b) est inférieur audit seuil bas,
d) une étape de charge de la batterie secondaire (2) alimentée à partir de la batterie principale (1) avec une mesure du temps écoulé depuis le démarrage de cette charge de ladite batterie secondaire ;
e) suite à l'étape d), une nouvelle étape de détection du niveau de charge de la batterie secondaire (2) ;
f) une étape d'arrêt de charge de la batterie secondaire (2) lorsque l'une des conditions entre l'atteinte d'un seuil haut du niveau de charge de l'étape e) et l'atteinte d'une durée prédéterminée par le temps écoulé mesuré dans l'étape d) est réalisée..

2. Méthode selon la revendication 1, **caractérisée en ce que** la détection de fin de mission correspond à une action spécifique réalisée par le conducteur du véhicule électrique ou hybride à l'arrêt, du type appuyer sur un bouton OFF, ou mettre un levier en position Parking, ou se lever de son siège.

3. Méthode selon l'une des revendications précédentes, **caractérisée en ce que** ledit seuil bas est compris entre 80% et 90% de charge.

4. Méthode selon l'une des revendications précédentes, **caractérisée en ce que** ledit seuil bas est égal à 85%.

5. Méthode selon l'une des revendications précédentes, **caractérisée en ce que** ledit seuil haut est compris entre 90% et 100% de charge.

6. Méthode selon l'une des revendications précédentes, **caractérisée en ce que** ledit seuil haut est égal à 95%.

7. Méthode selon l'une des revendications précédentes, **caractérisée en ce que** ladite durée prédéterminée est comprise entre 15 minutes et 60 minutes.

8. Méthode selon l'une des revendications précédentes, **caractérisée en ce que** ladite durée prédéterminée est égale à 30 minutes.

9. Véhicule électrique ou hybride comprenant :
- une batterie principale (1) servant à alimenter le moteur (3) de traction du véhicule ;
- une batterie secondaire (2) alimentée par la batterie principale (1) via un convertisseur (4) ;
- une unité centrale (5) recevant des informations d'entrée en provenance de différents capteurs, effectuant des calculs, et envoyant des informations de sortie au convertisseur (4) ;
ladite unité centrale (5) mettant en œuvre une méthode d'ajustement d'un niveau de charge de la batterie secondaire (2) selon l'une des revendications précédentes.

10. Véhicule selon la revendication précédente, **caractérisé en ce que** l'unité centrale (5) calcule le niveau de charge et pilote le convertisseur (4) pour réaliser l'arrêt **de** charge **de** la batterie secondaire (2) suivant la méthode d'ajustement.
